(19) Europäisches Patentamt
European Patent Office
Office européen des brevets

(11) **EP 3 642 570 B1**

(12) **EUROPÄISCHE PATENTSCHRIFT**

(45) Veröffentlichungstag und Bekanntmachung des Hinweises auf die Patenterteilung:
**15.12.2021  Patentblatt 2021/50**

(21) Anmeldenummer: **18729065.5**

(22) Anmeldetag: **28.05.2018**

(51) Int Cl.:
*G01F 1/66* (2006.01)    *G01F 25/00* (2006.01)

(86) Internationale Anmeldenummer:
**PCT/EP2018/063922**

(87) Internationale Veröffentlichungsnummer:
**WO 2018/233984 (27.12.2018 Gazette 2018/52)**

(54) **VORRICHTUNG UND VERFAHREN ZUR ULTRASCHALL-DURCHFLUSSMESSUNG**

DEVICE AND METHODS FOR ULTRASONIC FLOW METERING

DISPOSITIF ET PROCÉDÉS DE MESURE DE DÉBIT PAR ULTRASONS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.06.2017  EP 17177639**

(43) Veröffentlichungstag der Anmeldung:
**29.04.2020  Patentblatt 2020/18**

(73) Patentinhaber: **Flexim Flexible Industriemesstechnik GmbH 12681 Berlin (DE)**

(72) Erfinder: **FUNCK, Bernhard 18059 Rostock (DE)**

(74) Vertreter: **Grünbaum, Annekathrin et al Schnick & Garrels Patentanwälte PartG mbB Schonenfahrerstraße 7 18057 Rostock (DE)**

(56) Entgegenhaltungen:
**EP-A1- 2 228 631        EP-A2- 1 255 094
EP-A2- 1 255 094        WO-A1-97/19326
WO-A1-2016/144585   DE-A1-102008 055 164
DE-C1- 19 808 642      US-B1- 6 494 105**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung befasst sich mit einer Vorrichtung und einem Verfahren zur Ultraschall-Durchflussmessung.

Ultraschall-Durchflussmessgeräte finden breiten Einsatz in vielen Bereichen der Industrie. Bei der Ultraschall-Durchflussmessung nach dem Laufzeitverfahren wird die Differenz zweier sich in bzw. gegen die Strömung ausbreitender Schallsignale gemessen und daraus der Volumenstrom berechnet. Die Messung kann mit einem oder mehreren Messpfaden (Schallpfaden) erfolgen. Ein Messpfad wird dabei aus zwei Schallwandlern gebildet, die beide jeweils als Sender und als Empfänger betrieben werden können. Die mittlere Strömungsgeschwindigkeit Vl auf dem Schallpfad wird aus der Differenz Δt der Laufzeiten, dem Laufzeitanteil tl im Fluid sowie einer werkseitig bestimmten Sensorkonstante Ka ermittelt:

$$Vl = Ka *(\Delta t/2tl) \qquad\qquad Gl.\ (1)$$

Der Durchfluss Q ergibt sich aus dem Pfadmittelwert Vl, der Querschnittsfläche A des Rohres und dem strömungsmechanischen Kalibrierfaktor KF zu

$$Q = KF*A*Vl \qquad\qquad Gl.\ (2)$$

Der Kalibrierfaktor KF berechnet sich aus dem Verhältnis des Pfadmittelwertes Vl zum Flächenmittelwert der Strömungsgeschwindigkeit VA:

$$KF = VA/Vl \qquad\qquad Gl.\ (3)$$

Die Messung kann eingriffsfrei erfolgen, indem die Schallwandler von außen auf das Rohr aufgesetzt werden. Bei Rohren mit kreisförmigem Querschnitt ist diese Messanordnung jedoch auf diametrale Messpfade eingeschränkt. Der strömungsmechanische Kalibrierfaktor KF ist dann insbesondere im laminar-turbulenten Übergangsbereich der Strömung stark von der Reynoldszahl und den Einlaufbedingungen abhängig. In DE 19808642 C1 wird eine Anordnung mit eingriffsfreien Schallwandlern vorgeschlagen, die einen vom Strömungsprofil weitgehend unabhängigen Messeffekt ermöglicht. Durch Verwendung eines Messrohres mit fünfeckigem Querschnitt wird ein Schallpfadverlauf erzielt, bei dem der Pfadmittelwert Vl annähernd gleich dem Flächenmittelwert VA ist, sodass der strömungsmechanische Kalibrierfaktor KF unabhängig von der Reynoldszahl und den Einlaufbedingungen ungefähr KF = 1 ist. Dies gilt jedoch nur näherungsweise. Auch diese Anordnung zeigt eine, wenn auch geringe, Abhängigkeit von der Reynoldszahl. Die Funktion des strömungsmechanischen Kalibrierfaktors KF von der Reynoldszahl kann im Werk durch Kalibrierung ermittelt und im Rechenwerk des Messumformers hinterlegt werden. Während des Betriebes kann diese Funktion benutzt werden, um den Messwert zu korrigieren. Da die Reynoldszahl von der Viskosität abhängt, muss diese während der Messung bekannt sein. Bei vielen Medien, insbesondere z.B. bei Kohlenwasserstoffen, ist die Viskosität aber nur ungenügend genau bekannt.

Eine Möglichkeit zur Messung der Reynoldszahl beschreibt US 2015260558 A1. Die Reynoldszahl und die Viskosität werden aus dem Profilfaktor einer Vier-Pfadanordung ermittelt. Dazu wird mit Hilfe eines Flowconditioners und eines Reducers zunächst ein symmetrisches Profil erzeugt, damit der Profilfaktor ausschließlich von der Reynoldszahl und nicht von eventuellen Vorstörungen abhängt. Die Lösung eignet sich nicht zur eingriffsfreien Messung.

WO 2016/144585 A1 offenbart einen Ultraschall-Durchflussmesser mit mindestens einer ersten Erfassungsebene mit vier Ultraschallwandlern (ein erstes und ein zweites Wandlerpaar), die in einer ParallelogrammAnordnung an einer Messrohrwand unter einem bestimmten Montagewinkel angeordnet sind. Auf der Messrohrwand sind gegenüberliegend zwei Reflektoren angeordnet, um eine Vielzahl von direkten Messpfaden und eine Vielzahl von Reflexionspfaden zu ermöglichen. Diese Anordnung dient dazu, einen Volumenstrom zu bestimmen.

WO 97/19326 A1 betrifft ein Verfahren und eine Vorrichtung zur Ultraschall-Durchflussmessung für strömende Medien mit einem Messrohr, mit mindestens zwei am Messrohr angeordneten Ultraschallwandlerpaaren. Es ist ein die Reynoldssche Zahl durchgängig bestimmender Reynoldszahlmesser und ein mit einem Addierer und dem Reynoldszahlmesser verbundener Durchflussmengen korrektor vorgesehen.

DE 102008055164 A1 offenbart ein Messsystem zur Bestimmung und/oder Überwachung des Durchflusses eines Messmediums durch ein Messrohr mit zwei scheibenförmigen elektromechanischen Wandlerelementen, welche sich planparallel gegenüberstehen. Das Messsystem arbeitet nach dem Laufzeitdifferenz-Prinzip. Für die Messung zweier Geschwindigkeiten v1 und v2 ist mindestens ein weiteres Wandlerpaar angeordnet.

In EP 2228631 A1 wird ein Mehrweg-Ultraschall-Durchflussmesser zur Bestimmung der Durchflussrate eines Fluids in einer Leitung offengelegt, der mindestens zwei Wandlerpaare umfasst, die an der Leitung an zwei Sehnenpositionen angebracht sind, eine größer als und eine kleiner als eine Sehne mit mittlerem Radius, wobei das zusammengesetzte Verhältnis der beiden Weggeschwindigkeiten zur Durchflussrate über den Bereich der Reynolds-Zahlen im Wesentlichen konstant ist.

US 6494105 B1 legt eine Methode zur Messung des Flüssigkeitsstroms offen. Es wird eine isolierende Strömungsaufbereitungstechnologie mit einer Ultraschalltechnologie zur Bestimmung der Strömungsgeschwindigkeit kombiniert. Es wird das Verhältnis der Pfadgeschwindigkeiten als ein möglicher Diagnoseparameter genannt.

**Darstellung der Erfindung**

Aufgabe der Erfindung ist es, ein Verfahren für eine von der Viskosität unabhängige, genaue und eingriffsfreie Durchflussmessung zu entwickeln. Weiterhin ist es die Aufgabe, eine anwendbare Vorrichtung für das Verfahren zu beschreiben.

Erfindungsgemäß wird diese Aufgabe durch die in den Patentansprüchen aufgeführten Merkmale gelöst. Vorteilhafte Ausführungen sind in den abhängigen Ansprüchen beschrieben.

Eine mögliche, nicht beanspruchte Lösung ist eine Vorrichtung zur Ultraschall-Durchflussmessung mit wenigstens einem ersten Schallwandlerpaar, das aus einem im Sendebetrieb und einem im Empfangsbetrieb arbeitenden Clamp-on-Ultraschallwandler besteht. Der Querschnitt eines von einem gasförmigen oder flüssigen Medium durchströmten Messrohres ist im Wesentlichen ein Fünfeck mit einer Grundseite und mit jeweils im rechten Winkel angrenzenden Seiten sowie daran angrenzende, der Grundseite gegenüberliegende Seiten, welche einen Winkel kleiner als 180° einschließen. Das erste Schallwandlerpaar ist auf der Grundseite zur Erzeugung erster Schallpfade angeordnet. Zusätzlich ist wenigstens ein zweites Schallwandlerpaar angeordnet, wodurch ein oder mehrere zusätzliche Schallpfade erzeugt werden. Das wenigstens zweite Schallwandlerpaar ist auf einer oder beiden der an die Grundseite angrenzenden Seiten angeordnet.

Die erfindungsgemäße Vorrichtung zur Ultraschall-Durchflussmessung hat ein Schallwandlerpaar, das aus einem im Sendebetrieb und einem im Empfangsbetrieb arbeitenden Clamp-on-Ultraschallwandler besteht. Der Querschnitt eines von einem gasförmigen oder flüssigen Medium durchströmten Messrohres ist im Wesentlichen ein Fünfeck mit einer Grundseite und mit jeweils im rechten Winkel angrenzenden Seiten sowie daran angrenzende, der Grundseite gegenüberliegende Seiten, welche einen Winkel kleiner als 180° einschließen, wobei das Schallwandlerpaar auf der Grundseite zur Erzeugung eines ersten Schallpfades angeordnet ist. Eine der Grundseite gegenüberliegende Ecke zwischen den der Grundseite gegenüberliegenden Seiten ist abgeflacht und bildet einen Reflektor, so dass das auf der Grundseite angeordnete Schallwandlerpaar den ersten Schallpfad und einen zweiten Schallpfad realisiert. Der zweite Schallpfad verläuft von dem Clamp-on-Ultraschallwandler im Sendebetrieb über den Reflektor zum Clamp-on-Ultraschallwandler im Empfangsbetrieb.

Die erfindungsgemäßen Verfahren zur Ultraschall-Durchflussmessung gemäß den Ansprüchen 2 und 6 erfolgen unter Verwendung einer Vorrichtung mit einem Schallwandlerpaar, das aus einem im Sendebetrieb und einem im Empfangsbetrieb arbeitenden Clamp-on-Ultraschallwandler besteht. Der Querschnitt eines von einem gasförmigen oder flüssigen Medium durchströmten Messrohres ist im Wesentlichen ein Fünfeck mit einer Grundseite und mit jeweils im rechten Winkel angrenzenden Seiten sowie daran angrenzende, der Grundseite gegenüberliegende Seiten, welche einen Winkel kleiner als 180° einschließen. Das Schallwandlerpaar ist auf der Grundseite zur Erzeugung eines ersten Schallpfades angeordnet. Eine der Grundseite gegenüberliegende Ecke zwischen den der Grundseite gegenüberliegenden Seiten ist abgeflacht und bildet einen Reflektor, so dass das Schallwandlerpaar, das den ersten Schallpfad realisiert auch einen zweiten Schallpfad realisiert. Der zweite Schallpfad verläuft von dem auf der Grundseite befindlichen Clamp-on-Ultraschallwandler im Sendebetrieb über den Reflektor zu dem auf der Grundseite befindlichen Clamp-on-Ultraschallwandler im Empfangsbetrieb.

Erfindungsgemäß ist gemäß Anspuch 2 eine Funktion F_Re(K_VL) im Rechenwerk des Messumformers hinterlegt, welche eine Reynoldszahl in Abhängigkeit vom Verhältnis K_VL einer auf dem ersten Schallpfad ermittelten mittleren ersten Strömungsgeschwindigkeit zu einer auf dem zweiten Schallpfad ermittelten mittleren zweiten Strömungsgeschwindigkeit darstellt.

Für den ersten Schallpfad ist für eine Ausführung eine Funktion KF1(Re) hinterlegt, die ein Verhältnis eines Flächenmittelwertes einer Strömung im Messrohr zur auf dem ersten Schallpfad ermittelten Strömungsgeschwindigkeit in Abhängigkeit von der Reynoldszahl darstellt.

Für eine Ausführungsform ist ein Algorithmus implementiert, welcher mit einer Funktion F_Re(K_VL) aus den auf dem ersten und zweiten Schallpfad ermittelten Strömungsgeschwindigkeiten die Reynoldszahl berechnet und damit einen strömungsmechanischen Kalibrierfaktor KF1(Re) und einen Durchfluss $Q = KF1(Re) \cdot A \cdot VI$ berechnet. Über eine Funktion $vis = VA \cdot Di/Re$ wird aus der Reynoldszahl Re eine Viskosität vis berechnet.

Erfindungsgemäß ist gemäß Anspruch 6 eine Funktion KF1(K_VL) ist im Rechenwerk des Messumformers hinterlegt, welche einen strömungsmechanischen Kalibrierfaktor in Abhängigkeit vom Verhältnis K_VL der auf dem ersten Schallpfad ermittelten ersten Strömungsgeschwindigkeit zu der auf dem zweiten Schallpfad ermittelten zweiten Strömungsgeschwindigkeit darstellt.

Für eine Ausführung berechnet ein Algorithmus mit der Funktion KF1(K_VL) aus den auf dem ersten und zweiten Schallpfad ermittelten Strömungsgeschwindigkeiten den Durchfluss Q = KF1(K_VL)*A*VI.

**Ausführung der Erfindung**

Nachfolgend wird die Erfindung anhand von Ausführungsbeispielen näher erläutert. Es zeigen:

| | |
|---|---|
| Figur 1: | Seitenansicht des Messrohres mit Ultraschallwandlern und Schallpfad S1 nach dem Stand der Technik, |
| Figur 2: | Querschnitt des Messrohres in der Ebene des Schallwandlerpaars T1 und ausgewählte Teilschallpfade des Schallpfades S1, in die Ebene des Schallwandlerpaars T1 projiziert nach dem Stand der Technik, |
| Figur 3: | Querschnitt des Messrohres in der Ebene des Schallwandlerpaars T1 und Schallpfad S1 der gesamten Wellenfront nach dem Stand der Technik, |
| Figur 4a: | Querschnitt des Messrohres in der Ebene des Schallwandlerpaars T2 und Schallpfad S2 in Reflexanordnung, in die Ebene des Schallwandlerpaars T2 projiziert, |
| Figuren 4b bis d: | verschiedene Ansichten zur besseren Veranschaulichung, |
| Figur 5a: | Querschnitt des Messrohres in der Ebene des Schallwandlerpaars T2 und Schallpfad S2 in Direktanordnung, in die Ebene des Schallwandlerpaars T2 projiziert, |
| Figuren 5b bis d: | verschiedene Ansichten zur besseren Veranschaulichung, |
| Figur 6: | Querschnitt des Messrohres in der Ebene des Schallwandlerpaars T2 und Schallpfad S2 in Reflexanordnung mit Schallwandleranordnung auf der Grundseite, in die Ebene des Schallwandlerpaars T2 projiziert, |
| Figur 7: | Querschnitt des Messrohres in der Ebene des Schallwandlerpaars T1 und Schallpfad S2 in Reflexanordnung wobei das Schallwandlerpaar T1 sowohl den Schallpfad S1 als auch den Schallpfad S2 erzeugt, in die Ebene des Schallwandlerpaars T2 projiziert. |

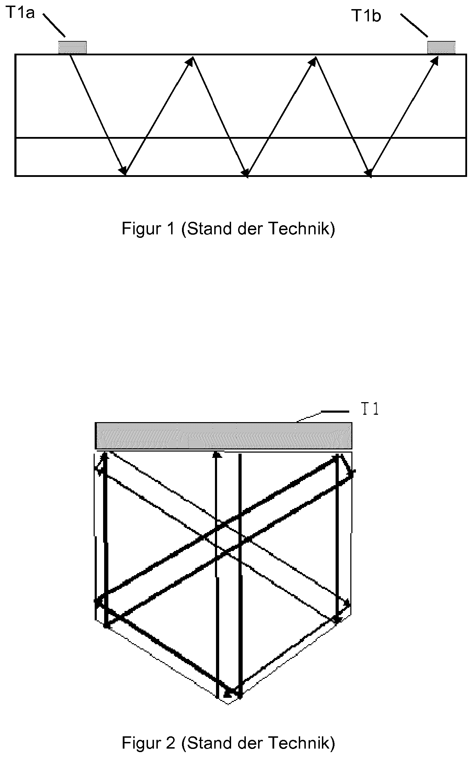

In Figur 1 wird die aus DE 19808642 C1 bekannte Messanordnung gezeigt. Der Schall wird von dem Schallwandler T1a des Schallwandlerpaars T1 in die Rohrwand eingekoppelt, durchläuft die Rohrwand und tritt ins Fluid ein. Nach mehrfacher Reflexion an der Rohrinnenwand wird der Schall über die Rohrwand ausgekoppelt und erreicht den Schallwandler T1b.

Die Dimensionierung der Querschnittsform des Messrohres M erfolgt mit dem Ziel, dass der gesamte Querschnitt des Messrohres M gleichmäßig beschallt wird und die Teilschallpfade der einzelnen Anteile der Wellenfront möglichst weitgehend äquivalente Bereiche des Fluids durchlaufen. Der Querschnitt ist ein Fünfeck, bei dem die Schallwandler T1a, T1b auf der im Folgenden als Grundseite 1 bezeichneten Seite angebracht sind. Die an die Grundseite 1 angrenzenden Seiten 2 und 3 schließen mit dieser jeweils einen rechten Winkel ein. Die der Grundseite 1 gegenüberliegenden Seiten 4 und 5 schließen einen Winkel kleiner als 180° ein.

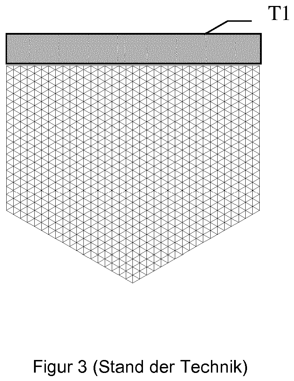

Figur 2 zeigt die Teilschallpfade S1a, S1b im Querschnitt für zwei ausgewählte Abstrahlpunkte des Schallwandlerpaars T1. Der Teilschallpfad S1a beginnt am rechten Schallwandlerrand des Schallwandlerpaars T1 und der Teilschallpfad S1b beginnt an einem Punkt in der Nähe des Schallwandlerzentrums des Schallwandlerpaars T1. Dabei wird vereinfachend angenommen, dass die Ausbreitung der Wellenfront auf parallelen Wegen erfolgt. Man erkennt, dass beide Teilschallpfade S1a, S1b äquivalente Bereiche des Fluids durchlaufen, wenn man davon ausgeht, dass das Strömungsprofil symmetrisch ist. Weiterhin durchläuft jeder der beiden Teilschallpfade S1a, S1b sowohl zentrale Bereiche als auch Randbereiche der Strömung. Näherungsweise trifft das auch für die übrigen Teilschallpfade zu. Auf allen Teilschallpfaden wird also in etwa der gleiche Messeffekt wirksam. Das Gesamtsignal ergibt sich als Summe der Teilsignale auf den einzelnen Teilschallpfaden S1a, S1b. Bei der Summierung wirkt die Schallwandleraperturfunktion als Wichtungsfaktor. Die Schallwandleraperturfunktion beschreibt die Empfindlichkeitsverteilung als Funktion des Ortes auf der Wandlerfläche. Da jedoch auf allen Teilschallpfaden der gleiche Messeffekt wirksam wird, hat die Schallwandleraperturfunktion auf den Gesamtmesseffekt bei dieser Vorrichtung keinen Einfluss. Der Messeffekt, nämlich die Schalllaufzeitänderung aufgrund der Strömung, ist also relativ unabhängig vom Strömungsprofil und der Schallwandleraperturfunktion. In Figur 3 sind die Teilschallpfade der gesamten Wellenfront des Schallwandlerpaar T1 dargestellt. Es wird die gleichmäßige Beschallung des Messrohrquerschnittes deutlich.

Es zeigt sich, dass der strömungsmechanische Kalibrierfaktor KF der Vorrichtung nach diesem Stand der Technik weitgehend, jedoch nicht vollständig, unabhängig vom Strömungsprofil sowie von der Reynoldszahl ist. Die Abhängigkeit des strömungsmechanischen Kalibrierfaktors KF von der Reynoldszahl Re auf dem Schallpfad S1 wird im Folgenden als KF1(Re) bezeichnet.

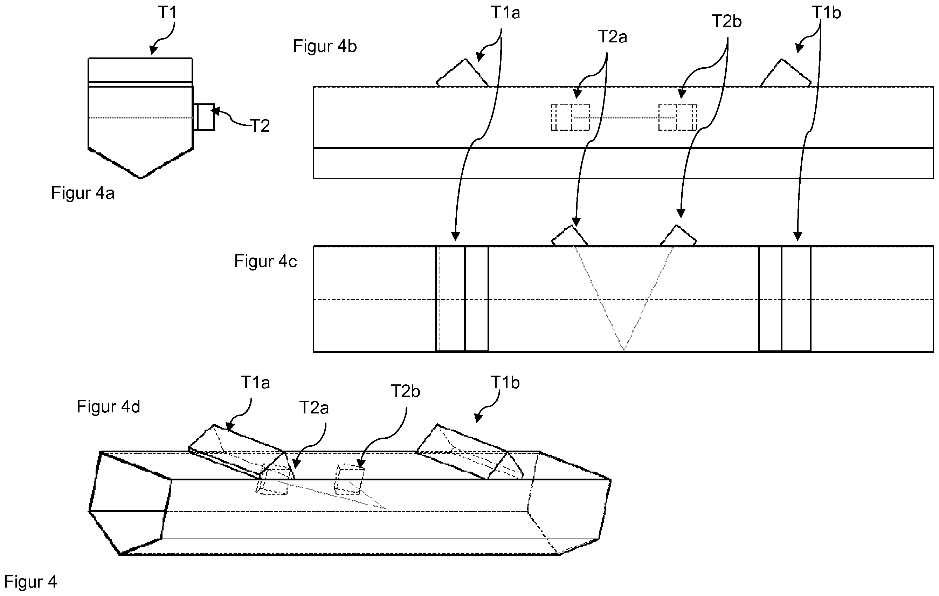

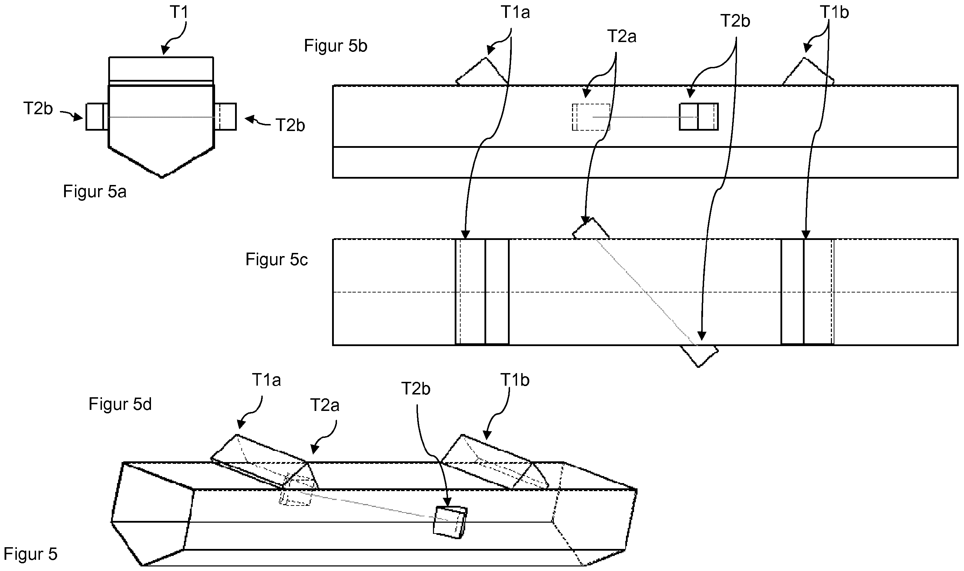

Die Figuren 4a bis 4d und 5a bis 5d zeigen eine Lösung an einem Querschnitt des Messrohres M in der Ebene des Schallwandlerpaars T2. Zusätzlich zu dem, auf der Grundseite 1 angeordneten Schallwandlerpaar T1 wird auf der angrenzenden Seiten 2 oder 3 oder auf beiden ein weiteres Schallwandlerpaar T2 angebracht. In Figur 4 ist der Querschnitt des Messrohres M in der Ebene des Schallwandlerpaars T2, bestehend aus den Schallwandlern T2a und T2b, und der Schallpfad S2 in Reflexanordnung, in die Ebene des Schallwandlerpaars T2 projiziert, dargestellt. Dabei verläuft der Schallpfad S2 von dem Schallwandler T2a zur gegenüberliegenden Seite und erreicht nach Reflexion an der Rohrinnenwand den Schallwandler T2b. Eine weitere Möglichkeit, einen Schallpfad S2 zu realisieren, wird in Figur 5 dargestellt, wo der Querschnitt des Messrohres in der Ebene des Schallwandlerpaars T2 mit den beiden Schallwandler T2a und T2b, welche auf den beiden an die Grundseite 1 angrenzenden Seiten 2, 3 angeordnet sind, und dem Schallpfad S2 in Direktanordnung zu sehen ist, in die Ebene des Schallwandlerpaars T2 projiziert. Dadurch wird zusätzlich zum Schallpfad S1 ein weiterer Schallpfad S2 realisiert. Die so realisierten Schallpfade S2 überdecken nur einen Teil des Strömungsprofils. Der auf diesen Schallpfaden wirksame strömungsmechanische Kalibrierfaktor KF2(Re) ist, im Gegensatz zu dem auf dem Schallpfad S1 wirksamen Kalibrierfaktor, insbesondere im Übergangsbereich zwischen laminarer und turbulenter Strömung stark von der Reynoldszahl Re abhängig.

Die Anordnung mit den beiden Schallpfaden S1 und S2 ist in der Lage, die auf dem Schallpfad S1 verbleibende Reynoldszahlenabhängigkeit zu korrigieren. Dazu wird in einem Messumformer der Zusammenhang zwischen dem Kalibrierfaktor KF1 und dem Verhältnis K_VL der mit den beiden Schallpfaden S1, S2 gemessenen mittleren Strömungsgeschwindigkeiten VL1, VL2 (mittlere Strömungsgeschwindigkeit VL auf dem Schallpfad entspricht der Pfadgeschwindigkeit) im Rechenwerk des Messumformers hinterlegt. Dies kann in Form einer Tabelle der Wertepaare erfolgen. Günstiger ist es, den Zusammenhang mit einer Funktion KF1(K_VL) zu approximieren.

Die auf dem ersten Schallpfad S1 ermittelte mittlere erste Strömungsgeschwindigkeit VL1 stellt annähernd einen Flächenmittelwert des Strömungsprofils dar und ist damit von der Reynoldszahl Re und Profilunsymmetrien weitgehend unabhängig. Als zweiter Schallpfad S2 wird vorzugsweise ein zentraler Messpfad verwendet. Dieser wird weit weniger von Profilunsymmetrien beeinflusst als dezentrale Messpfade. Daher benötigt die Anordnung kein symmetrisches Profil am Eingang des Messrohres.

Der strömungsmechanischen Kalibrierfaktor KF1 wird aus dem Verhältnis K_VL der auf dem ersten und zweiten Schallpfad S1, S2 ermittelten mittleren Strömungsgeschwindigkeiten VL1, VL2 approximiert.

$$K\_VL = VL1 / VL2 \hspace{4cm} \text{Gl. (4)}$$

Dazu wird im Messumformer der Zusammenhang zwischen dem strömungsmechanischen Kalibrierfaktor KF1 und dem Verhältnis K_VL hinterlegt, entweder als Tabelle der Wertepaare oder mit einer Funktion KF1(K_VL).

Aus dem Verhältnis K_VL kann außerdem die Reynoldszahl Re bestimmt werden. Dazu wird im Messumformer der Zusammenhang zwischen der Reyanoldszahl Re und dem Verhältnis K_VL hinterlegt, entweder als Tabelle der Wertepaare oder mit einer Funktion Re(K_VL).

Aus der Reynoldszahl Re kann auch die Viskosität vis über die Beziehung

$$vis = VA * Di / Re \hspace{4cm} \text{Gl. (5)}$$

berechnet werden. Dabei ist Di der äquivalente Innendurchmesser des Messrohres, der aus dem Querschnitt A des Messrohres berechnet wird. Di = Wurzel(4*A/Pi)

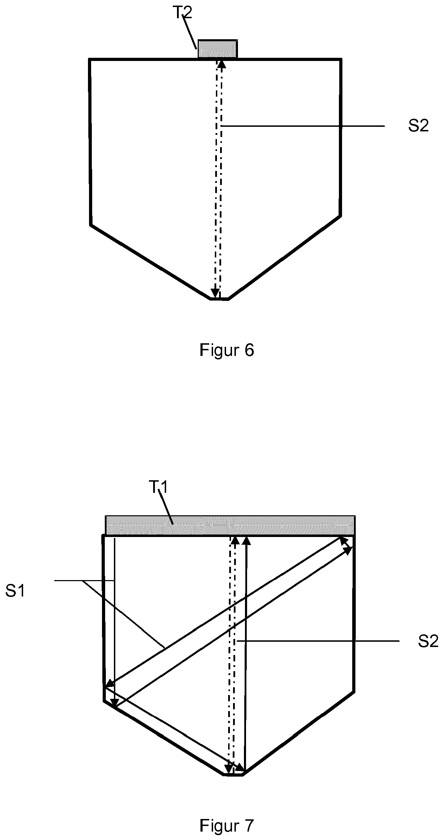

In Figur 6 wird die erfindungsgemäße Möglichkeit gezeigt, den Schallpfad S2 zu realisieren. Dazu ist die der Grundseite 1 gegenüberliegende Ecke zwischen den der Grundseite 1 gegenüberliegenden Seiten 4, 5 abgeflacht ausgeführt und bildet einen Reflektor 6. Ein auf der Grundseite 1 des Messrohres M angebrachtes Schallwandlerpaar T2 überträgt den Schall von der Grundseite 1 zum Reflektor 6 und zurück zur Grundseite 1.

Besonders einfach und entsprechend kostengünstig ist eine Anordnung nach Figur 7. Die der Grundseite 1 gegenüberliegende Ecke ist zwischen den der Grundseite 1 gegenüberliegenden Seiten 4, 5 abgeflacht ausgeführt und bildet den Reflektor 6. Das auf der Grundseite 1 des Messrohres M angebrachte Schallwandlerpaar T1 überträgt den Schall von der Grundseite 1 zum Reflektor 6 und zurück zur Grundseite 1. Das Schallwandlerpaar T1 realisiert den ersten Schallpfad S1, welcher in dem im Querschnitt fünfeckigen Messrohr entsprechend verläuft. Ein zweiter Schallpfad S2 verläuft zwischen dem Clamp-on-Ultraschallwandler im Sendebetrieb auf der Grundseite 1 über den Reflektor 6 zum Clamp-on-Ultraschallwandler im Empfangsbetrieb auf der Grundseite 1. Ein Teil des von dem Schallwandlerpaar T1 gesendeten Schalls verläuft auf dem Schallpfad S1 während ein kleinerer Teil auf dem Schallpfad S2 verläuft. Das Signal auf dem Schallpfad S2 erreicht den Empfangswandler wegen der kürzeren Schallpfadlänge deutlich eher als das Signal auf dem Schallpfad S1, sodass beide Signale voneinander unterscheidbar sind.

VL - mittlere Strömungsgeschwindigkeit auf dem Schallpfad = VL - Pfadmittelwert

S1, S2, S - Schallpfad = alles vom Sender zum Empfänger

$\Delta t$ - Differenz der Laufzeiten

tl - Laufzeitanteil im Fluid

Ka - werkseitig bestimmte Sensorkonstante

Q - Durchfluss

A - Querschnittsfläche des Rohres

KF - strömungsmechanischer Kalibrierfaktor

KF1 - strömungsmechanischer Kalibrierfaktor auf Schallpfad 1

VA - Flächenmittelwert der Strömungsgeschwindigkeit, VA - Strömungsgeschwindigkeit

Re - Reynoldszahl

KF1(Re) - Abhängigkeit des strömungsmechanischen Kalibrierfaktors KF von der Reynoldszahl Re auf dem Schallpfad S1

KF2(Re) - wirksame strömungsmechanische Kalibrierfaktor von der Reynoldszahl auf dem Schallpfad S2 abhängig

K_VL - Verhältnis

vis - Viskosität

M - Messrohr

T1 - erstes Schallwandlerpaar (Stand der Technik)

T1a - Schallwandler a des ersten Schallwandlerpaars T1

T1b - Schallwandler b des ersten Schallwandlerpaars T1

T2 - zweites Schallwandlerpaar

T2a - Schallwandler a des zweiten Schallwandlerpaars T2

T2b - Schallwandler b des zweiten Schallwandlerpaars T2

P Schallwandler Erfindung

S1 - Schallpfad des Schallwandlerpaars T1

S2 - Schallpfad des Schallwandlerpaars T2

1    Grundseite

2, 3    an die Grundseite 1 angrenzenden Seiten

4, 5    der Grundseite 1 gegenüberliegenden Seiten

6    Reflektor

**Patentansprüche**

1. Vorrichtung ausgeführt zur Durchführung des Verfahrens nach Anspruch 2 oder zur Durchführung des Verfahrens nach Anspruch 6 mit einem Schallwandlerpaar (T1), das aus einem im Sendebetrieb und einem im Empfangsbetrieb arbeitenden Clamp-on-Ultraschallwandler besteht, wobei der Querschnitt eines von einem gasförmigen oder flüssigen Medium durchströmten Messrohres (M) im Wesentlichen ein Fünfeck ist mit einer Grundseite (1) und mit jeweils im rechten Winkel angrenzenden Seiten (2, 3) sowie daran angrenzende, der Grundseite gegenüberliegende Seiten (4, 5), welche einen Winkel kleiner als 180 Grad einschließen, wobei das Schallwandlerpaar (T1) auf der Grundseite (1) zur Erzeugung eines ersten Schallpfades (S1) angeordnet ist, wobei eine der Grundseite (1) gegenüberliegende Ecke zwischen den der Grundseite (1) gegenüberliegenden Seiten (4, 5) abgeflacht ist und einen Reflektor (6) darstellt, so dass das auf der Grundseite (1) angeordnete Schallwandlerpaar (T1) den ersten Schallpfad (S1) und einen zweiten zentralen Schallpfad (S2) realisiert, welcher von dem Clamp-on-Ultraschallwandler im Sendebetrieb über den Reflektor (6) zum Clamp-on-Ultraschallwandler im Empfangsbetrieb verläuft.

2. Verfahren zur Ultraschall-Durchflussmessung unter Verwendung einer Vorrichtung mit einem Schallwandlerpaar (T1), das aus einem im Sendebetrieb und einem im Empfangsbetrieb arbeitenden Clamp-on-Ultraschallwandler besteht, wobei der Querschnitt eines von einem gasförmigen oder flüssigen Medium durchströmten Messrohres (M) im Wesentlichen ein Fünfeck ist mit einer Grundseite (1) und mit jeweils im rechten Winkel angrenzenden Seiten (2, 3) sowie daran angrenzende, der Grundseite gegenüberliegende Seiten (4, 5), welche einen Winkel kleiner als 180 Grad einschließen, wobei das Schallwandlerpaar (T1) auf der Grundseite (1) zur Erzeugung eines ersten Schallpfades (S1) angeordnet ist, **dadurch gekennzeichnet, dass** ein zweiter zentraler Schallpfad (S2) realisiert wird, welcher von dem auf der Grundseite (1) befindlichen Clamp-on-Ultraschallwandler im Sendebetrieb über einen Reflektor (6), welcher durch eine der Grundseite (1) gegenüberliegende, abgeflachte Ecke gebildet wird, wobei die abgeflachte Ecke zwischen den der Grundseite (1) gegenüberliegenden Seiten (4, 5) angeordnet ist, zu dem auf der Grundseite (1) befindlichen Clamp-on-Ultraschallwandler im Empfangsbetrieb verläuft, und dass eine Funktion F_Re(K_VL) im Rechenwerk des Messumformers hinterlegt ist, welche eine Reynoldszahl (Re) in Abhängigkeit vom Verhältnis K_VL einer auf dem ersten Schallpfad (S1) ermittelten mittleren ersten Strömungsgeschwindigkeit (VL1) zu einer auf dem zweiten Schallpfad (S2) ermittelten mittleren zweiten Strömungsgeschwindigkeit (VL2) darstellt.

3. Verfahren nach Anspruch 2 **dadurch gekennzeichnet, dass** für den ersten Schallpfad (S1) eine Funktion KF1(Re) hinterlegt ist, die ein Verhältnis eines Flächenmittelwertes einer Strömung im Messrohr (M) zur auf dem ersten Schallpfad (S1) ermittelten Strömungsgeschwindigkeit (VL1) in Abhängigkeit von der Reynoldszahl (Re) darstellt.

4. Verfahren nach Anspruch 2 **dadurch gekennzeichnet, dass** ein Algorithmus implementiert ist, welcher mit der Funktion F_Re(K_VL) aus den auf dem ersten und zweiten Schallpfad ermittelten Strömungsgeschwindigkeiten (VL1, VL2) die Reynoldszahl (Re) berechnet und damit einen strömungsmechanischen Kalibrierfaktor KF1(Re) und einen Durchfluss (Q) aus Q = KF1(Re)*A*VI berechnet, wobei A die Querschnittsfläche des Rohres ist und VI die mittlere Strömungsgeschwindigkeit.

5. Verfahren nach Anspruch 2 **dadurch gekennzeichnet, dass** über eine Funktion vis = VA * Di /Re aus dem äquivalenten Innendurchmesser (Di) des Messrohres (M) und der Reynoldszahl (Re) eine Viskosität (vis) berechnet wird.

6. Verfahren zur Ultraschall-Durchflussmessung unter Verwendung einer Vorrichtung mit einem Schallwandlerpaar (T1), das aus einem im Sendebetrieb und einem im Empfangsbetrieb arbeitenden Clamp-on-Ultraschallwandler besteht, wobei der Querschnitt eines von einem gasförmigen oder flüssigen Medium durchströmten Messrohres (M) im Wesentlichen ein Fünfeck ist mit einer Grundseite (1) und mit jeweils im rechten Winkel angrenzenden Seiten (2, 3) sowie daran angrenzende, der Grundseite gegenüberliegende Seiten (4, 5), welche einen Winkel kleiner als 180 Grad einschließen, wobei das Schallwandlerpaar (T1) auf der Grundseite (1) zur Erzeugung eines ersten Schallpfades (S1) angeordnet ist, **dadurch gekennzeichnet, dass** ein zweiter zentraler Schallpfad (S2) realisiert wird, welcher von dem auf der Grundseite (1) befindlichen Clamp-on-Ultraschallwandler im Sendebetrieb über einen Reflektor (6), welcher durch eine der Grundseite (1) gegenüberliegende, abgeflachte Ecke gebildet wird, wobei die abgeflachte Ecke zwischen den der Grundseite (1) gegenüberliegenden Seiten (4, 5) angeordnet ist, zu dem auf der Grundseite (1) befindlichen Clamp-on-Ultraschallwandler im Empfangsbetrieb verläuft, und dass eine Funktion KF1(K_VL) im Rechenwerk des Messumformers hinterlegt ist, welche einen strömungsmechanischen Kalibrierfaktor in Abhängigkeit vom Verhältnis (K_VL) der auf dem ersten Schallpfad (S1) ermittelten ersten Strömungsgeschwindigkeit (VL1) zu der auf dem zweiten Schallpfad (S2) ermittelten zweiten Strömungsgeschwindigkeit (VL2) darstellt.

7. Verfahren nach Anspruch 6, **dadurch gekennzeichnet, dass** ein Algorithmus mit der Funktion KF1(K_VL) aus den auf dem ersten und zweiten Schallpfad (S1, S2) ermittelten Strömungsgeschwindigkeiten (VL1, VL2) den Durchfluss (Q) als Q = KF1(K_VL)*A*VI berechnet, wobei A die Querschnittsfläche des Rohres ist und VI die mittlere Strömungsgeschwindigkeit.

**Claims**

1. Device designed for carrying out the method according to Claim 2 or for carrying out the method according to Claim 6 with an acoustic-transducer pair (T1) which consists of one clamp-on ultrasonic transducer operating in the transmit mode and one clamp-on ultrasonic transducer operating in the receive mode, wherein the cross-section of a measuring tube (M) flowed through by a gaseous or liquid medium is substantially a pentagon with a base (1) and with sides (2, 3) each adjoining at a right angle and with sides (4, 5) adjoining the aforementioned sides and situated opposite the base, which enclose an angle of less than 180°, wherein acoustic-transducer pair (T1) is arranged on the base (1) for the purpose of generating a first acoustic path (S1), wherein a vertex situated opposite the base (1) between the sides (4, 5) situated opposite the base (1) has been flattened out and represents a reflector (6), so that the acoustic-transducer pair (T1) arranged on the base (1) realizes the first acoustic path (S1) and a second central acoustic path (S2) which extends from the clamp-on ultrasonic transducer in the transmit mode via the reflector (6) to the clamp-on ultrasonic transducer in the receive mode.

2. Method for ultrasonic flow measurement using a device with an acoustic-transducer pair (T1) which consists of one clamp-on ultrasonic transducer operating in the transmit mode and one clamp-on ultrasonic transducer operating in the receive mode, wherein the cross-section of a measuring tube (M) flowed through by a gaseous or liquid medium is substantially a pentagon with a base (1) and with sides (2, 3) each adjoining at a right angle and with sides (4, 5) adjoining the aforementioned sides and situated opposite the base, which enclose an angle of less than 180°, wherein the acoustic-transducer pair (T1) is arranged on the base (1) for the purpose of generating a first acoustic path (S1), **characterized in that** a second central acoustic path (S2) is realized which extends from the clamp-on ultrasonic transducer in the transmit mode located on the base (1) via a reflector (6), which is formed by a flattened-out vertex situated opposite the base (1), wherein the flattened-out vertex is arranged between the sides (4, 5) situated opposite the base (1), to the clamp-on ultrasonic transducer in the receive mode located on the base (1), and **in that** a function F_Re(K_VL) has been saved in the arithmetic-logic unit of the measuring transducer, said function representing a Reynolds number (Re) as a function of the ratio K_VL of a mean first flow velocity (VL1) ascertained on the first acoustic path (S1) to a mean second flow velocity (VL2) ascertained on the second acoustic path (S2).

3.  Method according to Claim 2, **characterized in that** for the first acoustic path (S1) a function KF1(Re) has been saved which represents a ratio of an area mean value of a flow in the measuring tube (M) to the flow velocity (VL1) ascertained on the first acoustic path (S1) as a function of the Reynolds number (Re).

4.  Method according to Claim 2, **characterized in that** an algorithm has been implemented which with the function F_Re(K_VL) calculates the Reynolds number (Re) from the flow velocities (VL1, VL2) ascertained on the first and second acoustic paths and hence calculates a fluid-mechanics calibration factor KF1(Re) and a flow-rate (Q) from Q = KF1(Re)*A*VI, where A is the cross-sectional area of the tube and VI is the mean flow velocity.

5.  Method according to Claim 2, **characterized in that** a viscosity (vis) is calculated from the equivalent inside diameter (Di) of the measuring tube (M) and the Reynolds number (Re) via a function vis = VA * Di /Re.

6.  Method for ultrasonic flow measurement using a device with an acoustic-transducer pair (T1) which consists of one clamp-on ultrasonic transducer operating in the transmit mode and one clamp-on ultrasonic transducer operating in the receive mode, wherein the cross-section of a measuring tube (M) flowed through by a gaseous or liquid medium is substantially a pentagon with a base (1) and with sides (2, 3) each adjoining at a right angle and also with sides (4, 5) adjoining the aforementioned sides and situated opposite the base, which enclose an angle of less than 180°, wherein the acoustic-transducer pair (T1) is arranged on the base (1) for the purpose of generating a first acoustic path (S1), **characterized in that** a second central acoustic path (S2) is realized which extends from the clamp-on ultrasonic transducer in the transmit mode located on the base (1) via a reflector (6), which is formed by a flattened-out vertex situated opposite the base (1), wherein the flattened-out vertex is arranged between the sides situated opposite the base (1), to the clamp-on ultrasonic transducer in the receive mode located on the base (1), and **in that** a function KF1(K_VL) has been saved in the arithmetic-logic unit of the measuring transducer, said function representing a fluid-mechanics calibration factor as a function of the ratio (K_VL) of the first flow velocity (VL1) ascertained on the first acoustic path (S1) to the second flow velocity (VL2) ascertained on the second acoustic path (S2).

7.  Method according to Claim 6, **characterized in that** an algorithm calculates with the function KF1(KVL) the flow-rate (Q) from the flow velocities (VL1, VL2) ascertained on the first and second acoustic paths (S1, S2) as Q = KF1(K_VL)*A*VI, where A is the cross-sectional area of the tube and VI is the mean flow velocity.

**Revendications**

1.  Dispositif conçu pour effectuer le procédé selon la revendication 2 ou pour effectuer le procédé selon la revendication 6, comprenant une paire de transducteurs acoustiques (T1) qui est composée d'un transducteur à ultrasons à montage externe fonctionnant en mode émission et d'un transducteur à ultrasons à montage externe fonctionnant en mode réception, la section transversale d'un tube de mesure (M) traversé par un milieu gazeux ou liquide étant substantiellement un pentagone doté d'un côté de base (1) et de côtés (2, 3) adjacents respectivement à angle droit ainsi que de côtés (4, 5) adjacents à ceux-ci, opposés au côté de base, et qui définissent un angle inférieur à 180 degrés, la paire de transducteurs acoustiques (T1) étant disposée sur le côté de base (1) pour produire un premier chemin acoustique (S1), un coin opposé au côté de base (1) étant aplati entre les côtés (4, 5) opposés au côté de base (1) et représentant un réflecteur (6) de sorte que la paire de transducteurs acoustiques (T1) disposée sur le côté de base (1) réalise le premier chemin acoustique (S1) et un deuxième chemin acoustique central (S2) qui s'étend du transducteur à ultrasons à montage externe en mode émission au transducteur à ultrasons à montage externe en mode réception en passant par le réflecteur (6).

2. Procédé de mesure de débit par ultrasons en utilisant un dispositif comprenant une paire de transducteurs acoustiques (T1) qui est composée d'un transducteur à ultrasons à montage externe fonctionnant en mode émission et d'un transducteur à ultrasons à montage externe fonctionnant en mode réception, la section transversale d'un tube de mesure (M) traversé par un milieu gazeux ou liquide étant substantiellement un pentagone doté d'un côté de base (1) et de côtés adjacents (2, 3) respectivement à angle droit ainsi que de côtés (4, 5) adjacents à ceux-ci, opposés au côté de base, et qui définissent un angle inférieur à 180 degrés, la paire de transducteurs acoustiques (T1) étant disposée sur le côté de base (1) pour produire un premier chemin acoustique (S1),
**caractérisé en ce qu'**un deuxième chemin acoustique central (S2) est réalisé qui s'étend du transducteur à ultrasons à montage externe en mode émission qui se trouve sur le côté de base (1) au transducteur à ultrasons à montage externe en mode réception qui se trouve sur le côté de base (1) en passant par un réflecteur (6) qui est formé par un coin aplati opposé au côté de base (1), le coin aplati étant disposé entre les côtés (4, 5) opposés au côté de base (1), et **en ce que** dans l'unité arithmétique du transducteur de mesure est enregistrée une fonction F_Re(K_VL) qui représente un nombre de Reynolds (Re) en fonction du rapport K_VL entre une première vitesse d'écoulement moyenne (VL1) déterminée sur le premier chemin acoustique (S1) et une deuxième vitesse d'écoulement moyenne (VL2) déterminée sur le deuxième chemin acoustique (S2).

3. Procédé selon la revendication 2, **caractérisé en ce que** pour le premier chemin acoustique (S1), une fonction KF1(Re) est enregistrée qui représente un rapport entre une moyenne de superficie d'un écoulement dans le tube de mesure (M) et une vitesse d'écoulement (VL1) déterminée sur le premier chemin acoustique (S1) en fonction du nombre de Reynolds (Re).

4. Procédé selon la revendication 2, **caractérisé en ce qu'**un algorithme est mis en œuvre qui calcule à l'aide de la fonction F_Re(K_VL) à partir des vitesses d'écoulement (VL1, VL2) déterminées sur les premier et deuxième chemins acoustiques le nombre de Reynolds (Re) et calcule ainsi un facteur d'étalonnage d'écoulement mécanique KF1(Re) et un débit (Q) à partir de Q = KF1(Re)*A*VI, où A est la superficie de la section du tube, et VI est la vitesse d'écoulement moyenne.

5. Procédé selon la revendication 2, **caractérisé en ce qu'**à l'aide d'une fonction vis = VA * Di/Re, une viscosité (vis) est calculée à partir du diamètre intérieur équivalent (Di) du tube de mesure (M) et du nombre de Reynolds (Re).

6. Procédé de mesure de débit par ultrasons en utilisant un dispositif comprenant une paire de transducteurs acoustiques (T1) qui est composée d'un transducteur à ultrasons à montage externe fonctionnant en mode émission et d'un transducteur à ultrasons à montage externe fonctionnant en mode réception, la section transversale d'un tube de mesure (M) traversé par un milieu gazeux ou liquide étant substantiellement un pentagone doté d'un côté de base (1) et de côtés adjacents (2, 3) respectivement à angle droit ainsi que de côtés (4, 5) adjacents à ceux-ci, opposés au côté de base, et qui définissent un angle inférieur à 180 degrés, la paire de transducteurs acoustiques (T1) étant disposée sur le côté de base (1) pour produire un premier chemin acoustique (S1),
**caractérisé en ce qu'**un deuxième chemin acoustique central (S2) est réalisé qui s'étend du transducteur à ultrasons à montage externe en mode émission qui se trouve sur le côté de base (1) au transducteur à ultrasons à montage externe en mode réception qui se trouve sur le côté de base (1) en passant par un réflecteur (6) qui est formé par un coin aplati opposé au côté de base (1), le coin aplati étant disposé entre les côtés (4, 5) opposés au côté de base (1), et **en ce que** dans l'unité arithmétique du transducteur de mesure est enregistrée une fonction KF1(K_VL) qui représente un facteur d'étalonnage de la mécanique des fluides en fonction du rapport (K_VL) entre la première vitesse d'écoulement (VL1) déterminée sur le premier chemin acoustique (S1) et la deuxième vitesse d'écoulement (VL2) déterminée sur le deuxième chemin acoustique (S2).

7. Procédé selon la revendication 6, **caractérisé en ce qu'**un algorithme qui calcule à l'aide de la fonction KF1(K_VL), à partir des vitesses d'écoulement (VL1, VL2) déterminées sur les premier et deuxième chemins acoustiques (S1, S2), le débit (Q) par Q = KF1(K_VL)*A*VI, où A est la superficie de la section du tube, et VI est la vitesse d'écoulement moyenne.

T1a

T1b

Figur 1 (Stand der Technik)

T1

Figur 2 (Stand der Technik)

T1

Figur 3 (Stand der Technik)

Figur 4b

Figur 4c

Figur 4a

Figur 4d

Figur 4

T1b
T2b
T2a
T1a
T2
T1

Figur 5a

Figur 5b

Figur 5c

Figur 5d

Figur 5

T1
T2b
T1a
T1b
T2a
T2b

T2

S2

Figur 6

T1

S1

S2

Figur 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19808642 C1
- US 2015260558 A1
- WO 2016144585 A1
- WO 9719326 A1
- DE 102008055164 A1
- EP 2228631 A1
- US 6494105 B1